# EUROPEAN PATENT APPLICATION

(11) **EP 1 617 640 A1**
(43) Date of publication of application: **18.01.2006**
(21) Application number: 04727682.9
(22) Date of filing: 15.04.2004
(51) Int. Cl.: H04M 3/42

(54) **MULTIMEDIA RBT/BT SENDING-OUT SYSTEM AND METHOD**

(30) Priority: 18.04.2003 JP 2003114404
(71) Applicant: NEC CORPORATION, Minato-ku, Tokyo 108-8001 (JP)
(72) Inventor: HONDA, Shinichiro, c/o NEC Corporation, Tokyo 1088001 (JP)
(74) Representative: Betten & Resch
(86) International application number: PCT/JP2004/005379
(87) International publication number: WO 2004/093422

(57) **Abstract**

The present invention has as its object the realization of a simple configuration for transmitting RBT/BT that are converted to multimedia and that differ for each subscriber; this configuration includes: a subscriber service control device for registering the multimedia RBT/BT service subscription states for each subscriber terminal; a user profile control device for registering profiles for each subscriber terminal that is subscribed to the multimedia RBT/BT service; a media control storage device for registering multimedia RBT/BT for each subscriber terminal that is subscribed to the multimedia RBT/BT service; and a multimedia RBT/BT reproduction control device for, upon receiving an incoming call to the subscriber terminal, checking the user profile of the subscriber and multimedia files that are to be reproduced based on the registered content of each of the above-described devices and reproducing the multimedia in the call originator terminal.

## Description

### Technical Field

The present invention relates to a telephone exchange, and more particularly to a telephone exchange and telephone exchange system that are configured to allow setting of the ring-back tone and busy tone, and to a telephone exchange method.

### Background Art

In the prior art, the ring-back tone (hereinbelow abbreviated "RBT") and busy tone (hereinbelow abbreviated "BT") that are transmitted from an exchange at the time of origination of a telephone call are realized by a monotonic tone.

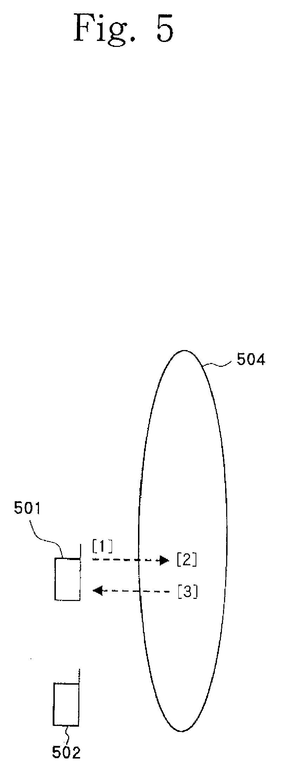

FIG. 5 is a block diagram showing the configuration for transmitting a RBT or BT.

When implementing call-out from originator terminal 501 to called-party terminal 502, of the exchanges that make up circuit switching telephone network 504, connection is realized ([1]) to, the exchange (not shown) that is closest to originator terminal 501. The exchange that receives the connection checks the state (such as vacant, busy, and out of range) of called-party terminal 502 ([2]), and then reproduces an RBT tone when the state is vacant and, a BT tone when busy, and transmits these tones to call originator terminal 501 side ([3]).

As described above, a system according to the prior art assumes that an RBT/BT is reproduced from the exchange that is closest to the call-originator terminal. The RBT/BT that is reproduced is determined by the exchange.

Although a monotonic tone is usually reproduced as the RBT/BT as described above, Document 1 (JP-A-H03-123269), Document 2 (JP-A-H03-191645), Document 3 (JP-A-H09-182978), and Document 4 (JP-A-2003-505937) disclose the transmission of multimedia such as speech, melodies, still pictures, or videos to the call originator instead of a tone.
In Document 1, a technology is disclosed for storing speech as RBT/BT in a telephone exchange.

In Document 2, a technology is disclosed for notifying the result of detecting RBT/BT by means of speech.

In Document 3, a technology is disclosed for registering image/voice messages in an exchange and then, in accordance with the transmission or non-transmission of RBT and the content that has been registered in advance, for sending the image/voice message that has been recorded by the exchange.

Document 4 discloses a technology for transmitting, in place of RBT, business information in the form of voice/characters/images.

Of the above-described prior art, the technology disclosed in Documents 1, 2, and 4 involves the transmission of fixed information, and does not enable the unique profiling of each subscriber or the selective reproduction of RBT/BT in accordance with the wishes of each subscriber.
The technology that is disclosed in Document 3 involves the transmission of image/voice messages that are recorded by an exchange, but an ordinary exchange is not provided with capabilities such as voice recording or codec conversion, and converting RBT/BT to multimedia in an already existing exchange is therefore problematic. Even if conversion of RBT/BT to multimedia were possible, it is not ordinarily possible to realize such features as: the manipulation of media files from a signal processor; the performance by a subscriber of operations such as service subscription and the registration, alteration, and deletion of profiles by way of a network or a packet network; and the registration of media files by way of a telephone or the Internet.

In addition it has further been impossible to realize the conversion of RBT/BT reproduction media in accordance with circuit types, bandwidth, voice codec method, and telephone characteristics, or to implement combined reproduction of a plurality of media.

### Disclosure of the Invention

It is an object of the present invention to provide a system and method for solving the above-described problems.
A system according to the method of the present invention has the following forms:
A system of the present invention is a multimedia RBT/BT transmission system for transmitting to call originator terminals multimedia RBT/BT that differ for each subscriber terminal; this system being provided with:
   a subscriber service control device in which multimedia RBT/BT service subscription states are registered for each subscriber terminal; a user profile control device in which profiles are registered for each subscriber terminal that has subscribed to a multimedia RBT/BT service; a media control storage device in which multimedia RBT/BT are registered for each subscriber terminal that has subscribed to a multimedia RBT/BT service;
   a multimedia RBT/BT reproduction control device for controlling the operation of each of the above-described devices; and
   an exchange for, upon receiving notification of an incoming call to a subscriber terminal, both checking the state of the subscriber terminal, and referring to the subscriber service control device to check whether the subscriber terminal is registered or not; and, if the subscriber terminal is registered in the subscriber service control device, and moreover, if the state of the subscriber terminal is vacant or busy, implementing routing to the multimedia RBT/BT reproduction control device.

The multimedia RBT/BT reproduction control device, upon receiving an incoming call to a subscriber terminal, submits an inquiry to the user profile control device for a user profile of the subscriber; upon subsequently receiving notification of a multimedia file that is to be reproduced from the user profile control device, submits a request to the media control storage device to reproduce the relevant multimedia file; and when the multimedia file is consequently transferred from the media control storage device, converts the multimedia file to multimedia and reproduces the multimedia on the originator terminal by way of the exchange.

In this case, the media control storage device may register multimedia RBT/BT such as speech, melodies, still pictures, and video.
In addition, profiles for each subscriber terminal that are registered in the user profile control device may include various elements as profile parameters such as the originator terminal, the telecommunication carrier that the originator terminal uses, a time and date, or a day to be remembered.
In addition, registration to the user profile control device and media control storage device may be carried out by way of a network.

Still further, registration to the media control storage device may be realized by way of a subscriber terminal and a telephone exchange network, or by way of a subscriber terminal and a network.

The new creation, editing, verification, and deletion of a profile on the user profile control device and the media control storage device may be carried out by way of a packet exchange network and a network.
This system is a system for converting RBT (Ring Back Tone)/BT (Busy Tone), which a telephone call originator hears when calling the called party or when the called party is busy, to multimedia such as melodies, still pictures, and videos. The preparation and reproduction of multimedia RBT/BT that is here heard here by the call originator can be controlled for each call originator or for each telecommunication carrier that is used by the call originator.

### Brief Description of the Drawings

FIG. 1 is a block diagram showing the configuration of a working example according to the present invention;
FIG. 2 is a block diagram showing both the configuration and operation of a working example according to the present invention;
FIG. 3 is a block diagram showing both the configuration and operation of a working example according to the present invention;
FIG. 4 is a block diagram showing both the configuration and the operation of another working example according to the present invention; and
FIG. 5 is a block diagram showing the configuration of an example of the prior art.

### Best Mode for Carrying Out the Invention

The following explanation regards working examples of the present invention with reference to the accompanying figures.

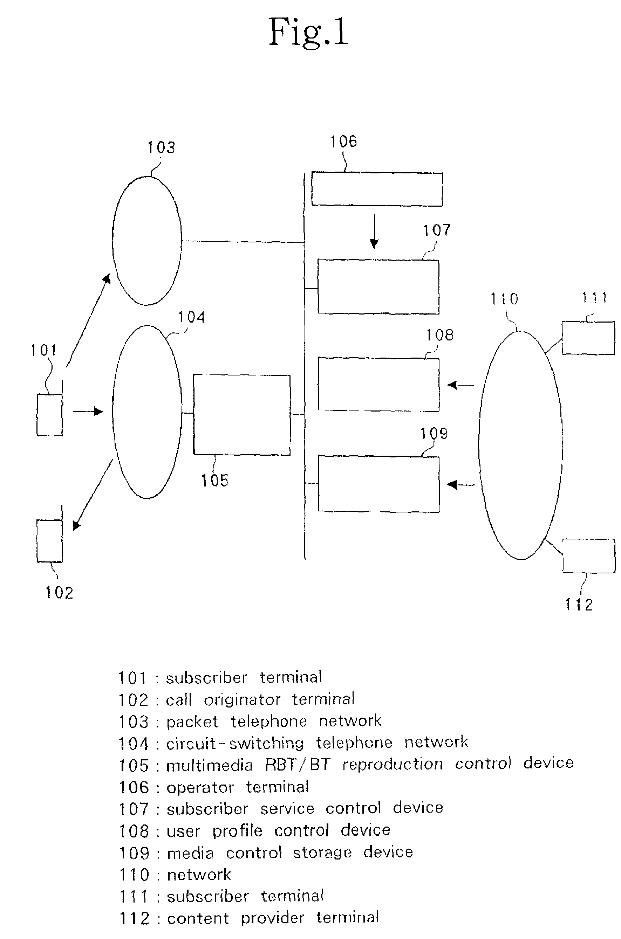

FIG. 1 is a block diagram showing the configuration of a working example according to the present invention.

This working example is made up of: subscriber terminal 101; call originator terminal 102; packet telephone network 103; circuit-switching telephone network 104; multimedia RBT/BT reproduction control device 105; operator terminal 106; subscriber service control device 107; user profile control device 108; media control storage device 109; network 110; subscriber terminal 111; and content provider terminal 112.

Multimedia RBT/BT reproduction control device 105 has capabilities for reproducing and controlling multimedia RBT/BT. The operator of the telecommunication carrier registers in subscriber service control device 107 by way of operator terminal 106 the subscriber terminals that are used by subscribers to whom the multimedia RBT/BT service is provided. User profile control device 108 manages a table for selecting RBT/BT that subscribers have registered. Media control storage device 109 stores and manages multimedia RBT/BT; and content provider terminal 112 provides multimedia RBT/BT media files to media control storage device 109 by way of network 110.

A subscriber that uses subscriber terminal 101 in this working example is a user who has submitted an application to the telecommunication carrier to receive the multimedia RBT/BT service. The application for receiving the service need not be conveyed by using the system of this working example, but may be provided by any of a variety of means that are provided by the telecommunication carrier that implements the service. When the system according to the present working example is used, the application may be submitted as an online subscription by way of multimedia RBT/BT reproduction control device 105, and no particular limitations apply.

The originator that uses originator terminal 102 in the present working example is a user who originates a call to subscriber terminal 101, and this user hears multimedia RBT/BT based on a profile that the called party has registered in advance in user profile control device 108.

Packet telephone network 103 and circuit-switching telephone network 104 are the network equipment of a telecommunication carrier that provides a voice and data communication service.

Operator terminal 105 is a terminal that is used by the operator of the telecommunication carrier for carrying out the tasks of registering in necessary devices the service for which an application has been submitted from a user.

Multimedia RBT/BT reproduction control device 105 is a device having the capabilities to reproduce and control multimedia RBT/BT. Multimedia RBT/BT reproduction control device 105 performs conversion, combination, and reproduction of media such that the call originator can hear, by way of packet telephone network 103 or circuit-switching telephone network 104 and originator terminal 102, the multimedia RBT/BT that has been stored in media control storage device 109. In addition, a subscriber can further submit an application to receive a service by way of subscriber terminal 101 and multimedia RBT/BT reproduction control device 105. In this case, multimedia RBT/BT reproduction control device 105 reproduces and provides the guidance necessary for service subscription. Multimedia RBT/BT reproduction control device 105 further has capabilities for checking the service subscription state and registered profile of a subscriber, and transmits the content of such a check to subscriber terminal 101.

Subscriber service control device 107 is a device by which the operator of the telecommunication carrier registers users' services, and an operator of the telecommunication carrier that has received an application for multimedia RBT/BT service from a user registers the service in subscriber service control device 107 by way of operator terminal 106.

User profile control device 108 is a device for managing user profiles. A user profile is a means by which a subscriber defines, for example, the selection rules of multimedia RBT/BT that are to be played for each call originator or each telecommunication carrier that is used by a call originator.

Media control storage device 109 is a device for storing and managing the media of multimedia RBT/BT.

Content provider terminal 112 is a device for providing the multimedia RBT/BT media files that have been created by a content provider, whereby the media files that have been created can be uploaded and registered to media control storage device 109 by way of, for example, network 110. A service subscriber can also, in place of the content provider, register media files in media control storage device 109 by way of a telephone or the Internet.

In the present working example, an operator of the telecommunication carrier registers a subscriber of a multimedia RBT/BT service for the prepare of transmitting an image/speech message instead of RBT/BT to subscriber service control device 107 by way of operator terminal 106.

When there is an incoming call to subscriber terminal 101 that is used by a service subscriber, the exchange (not shown) that is nearest to subscriber terminal 102 and that forms a part of circuit-switching telephone network 104 checks the state (vacant, busy, or out of range) of subscriber terminal 101, and implements routing to multimedia RBT/BT reproduction control device 105 when the state of subscriber terminal 101 is vacant or busy. After this routing, multimedia RBT/BT reproduction control device 105 accesses the profiles in user profile control device 108, and the multimedia RBT or BT that are to be reproduced is determined. The RBT/BT that has been determined is sent to the call originator from media control storage device 109 by way of multimedia RBT/BT reproduction control device 105.

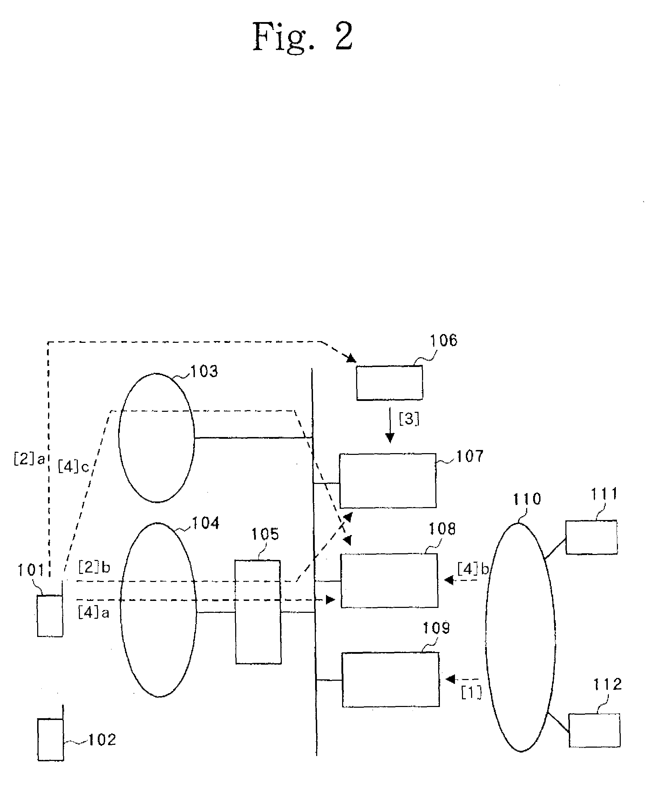

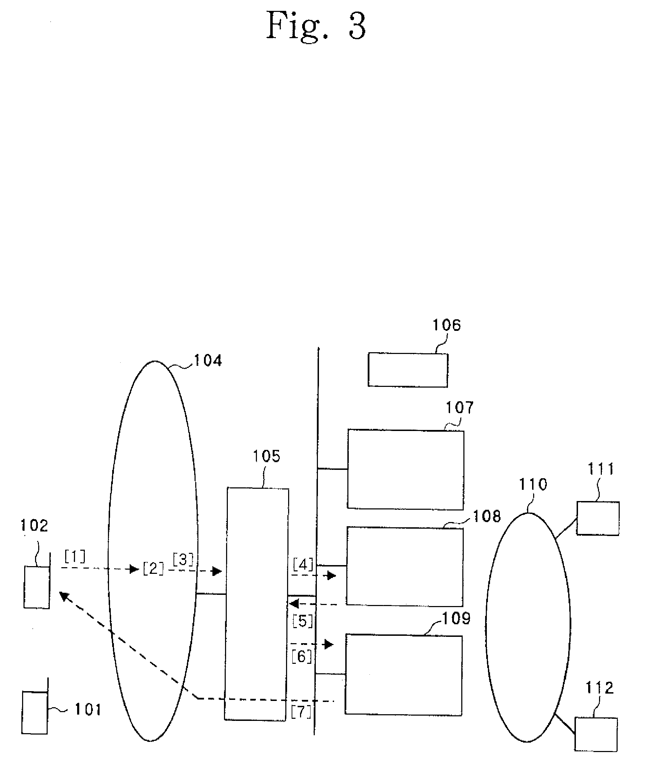

The explanation next regards the operation of the present working example with reference to FIG. 2 and FIG. 3.

The explanation first regards the process up to the start of the multimedia RBT/BT service with reference to FIG. 2.

In FIG. 2, content provider that provides multimedia RBT/BT media files, uploads and registers media files to media control storage device 109 by way of, for example, content provider terminal 112 and network 110. In addition to voice, a variety of formats such as melodies, still pictures, and videos can be used in the media files ([1]).

On the other hand, a user that wishes to have service provided submits an application for subscribing to multimedia RBT/BT service to a telecommunication carrier. Methods of registering for the multimedia RBT/BT service include: a method ([2]a) in which an operator of the telecommunication carrier performs registration by way of operator terminal 106 without using the system of the present working example, such as at a business window or call center, and method ([2]b) in which registration is realized by way of multimedia RBT/BT reproduction control device 105 that is a device that makes up the system of the present working example. In the method of ([2]a), an operator of the telecommunication carrier registers the service in subscriber service control device 107 ([3]).

A subscriber who has completed service registration next registers the multimedia RBT/BT that are to be played to a call originator and, for example, the selection rules relating to the multimedia RBT/BT. Registration methods include: a method ([4]a) that is realized by way of a circuit-switching network and multimedia RBT/BT reproduction control device 105; a method ([4]b) that is realized from the outside by way of, for example, the Internet; and a method ([4]c) that is realized by way of a packet exchange network. The multimedia RBT/BT that is selected and reproduced can be controlled by the call originator, the telecommunication carrier that is used by the call originator, a time period, and a specific day. In addition, registration is also possible such that a plurality of media files is combined and reproduced.
Completion of the above-described process achieves the state in which allows the service to be provided.

Explanation next regards the operations for providing service in the present working example with reference to FIG. 3.

In FIG. 3, the call originator uses originator terminal 102 to originate a call to subscriber terminal 101 ([1]). No inquiry is submitted regarding whether a subscription for multimedia RBT/BT service exists for this call originator.
The exchange that makes up a part of circuit-switching telephone network 104 that receives the call origination request both checks the state of subscriber terminal 101 (vacant, busy, or out of range) and refers to the state of registration of subscriber service control device 107 to check whether the subscriber that uses subscriber terminal 101 has subscribed to a multimedia RBT/BT service ([2]]).

If the subscriber that uses subscriber terminal 101 is a service subscriber, and moreover, if the state of subscriber terminal 101 is vacant or busy, the exchange performs routing to multimedia RBT/BT reproduction control device 105 ([3]).

Upon receiving the incoming call, multimedia RBT/BT reproduction control device 105 submits an inquiry to user profile control device 108 for the user profile of the subscriber. At this time, multimedia RBT/BT reproduction control device 105 provides information such as call originator information to user profile control device 108.

Upon receiving the inquiry for user profile, user profile control device 108 specifies the multimedia files that are to be reproduced based on parameters, such as subscriber information, call origination carrier information, time period, and specific dates, that are necessary for the selection of media files and content that has been registered in advance by the subscriber, and reports the specified content to multimedia RBT/BT reproduction control device 105 ([5]).

Multimedia RBT/BT reproduction control device 105, having received a response from user profile control device 108, submits a request for reproduction of the media files to media control storage device 109 in which multimedia files are stored and managed ([6]).

Media control storage device 109, having received the above-described request for reproduction, transfers the multimedia files to multimedia RBT/BT reproduction control device 105; and multimedia RBT/BT reproduction control device 105 converts the files that have been transferred to media and then plays back the media to the call originator by way of circuit-switching telephone network 104 ([7]).

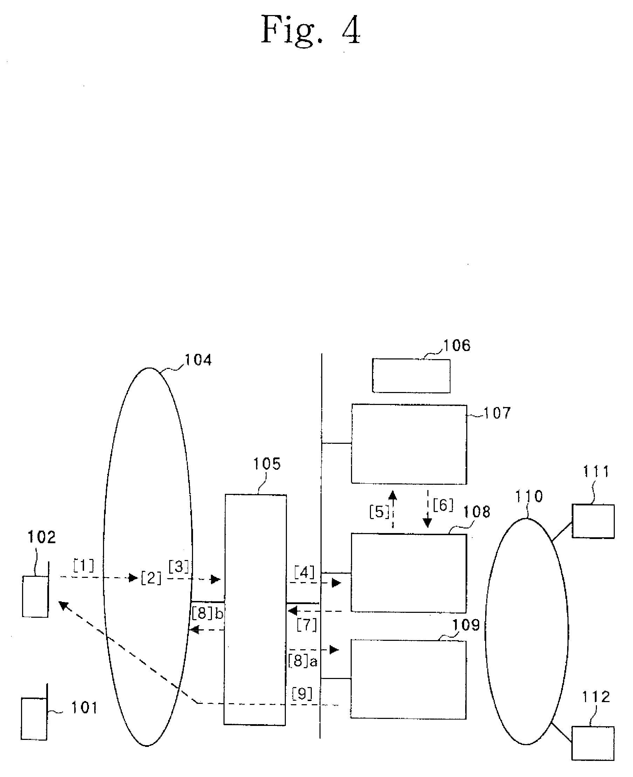

Here, multimedia RBT/BT reproduction control device 105 is not only capable of converting the multimedia to a form that is appropriate for reproduction based on the circuit type, bandwidth, speech codec method and characteristics of the telephone, but is also capable of combining (mixing) and reproducing multimedia when there is a request for mixing and reproducing a plurality of multimedia files from user profile control device 108.
The following explanation regards another working example of the present invention with reference to FIG. 4.

FIG. 4 shows the operation of another working example of the present invention with the configuration and the processing up to the start of service of this working example being the same as that of the first working example. Although checking for the existence of a subscription to a multimedia RBT/BT service was carried out on the exchange network side in the first working example as shown in the processes of FIG. 3, the check for existence of a subscription to a multimedia RBT/BT service in the present working example is carried out within the system.

In FIG. 4, when a call is originated from originator terminal 102 to subscriber terminal 101 ([1]), an exchange that forms a part of circuit-switching telephone network 104 that has received the request for call origination, checks the state (vacant, busy, or out of range) of subscriber terminal 101 ([2]).

If subscriber terminal 101 is vacant or busy, routing is performed from the switching network to multimedia RBT/BT reproduction control device 105 ([3]).

Multimedia RBT/BT reproduction control device 105, having received the incoming call, submits an inquiry to user profile control device 108 for the user profile of the subscriber. Multimedia RBT/BT reproduction control device 105 here provides, for example, information of the call originator to user profile control device 108 ([4]).

User profile control device 108, having received the inquiry for user profile, submits an inquiry to subscriber service control device 107 regarding the existence of a service subscription of the called party ([5]).

Subscriber service control device 107, having received the inquiry from user profile control device 108, verifies the service subscription state of the called party and reports the result to user profile control device 108 ([6]).

User profile control device 108, having succeeded in verifying the service subscription of the called party, here for the first time specifies the multimedia files that are to be reproduced based on parameters that are necessary for selecting media files, these parameters including, for example, the subscriber information of the call originator, information of the origination carrier, time period, and specific dates, and profiles that have been registered in advance by the subscriber; and responds with these results to multimedia RBT/BT reproduction control device 105 ([7]).

If, however, the called party has not yet subscribed to the service, this state is reported to multimedia RBT/BT reproduction control device 105 ([7]).

Multimedia RBT/BT reproduction control device 105, having received a response from user profile control device 108, submits a request for reproduction of the relevant media files to media control storage device 109 in which multimedia files are stored and managed ([8]a).

On the other hand, if a report is received that the called party has not yet subscribed to the service, multimedia RBT/BT reproduction control device 105 reports this state to circuit-switching telephone network 104 and requests reproduction of the normal RBT/BT ([8]b).

Media control storage device 109, having received the reproduction request ([8]a), transfers multimedia files to multimedia RBT/BT reproduction control device 105, and the files that have been transferred are converted by multimedia RBT/BT reproduction control device 105 to media and then played back to the call originator by way of the circuit-switching network ([9]). Multimedia RBT/BT reproduction control device 105 is at this point not only capable of converting media to a form that is appropriate for reproduction based on the circuit type, bandwidth, speech codec method and the characteristics of the telephone, but is also capable of combining (mixing) and reproducing the media when there is a request for mixing and reproducing a plurality of media files from user profile control device 108.

Due to the above-described configuration, the present invention exhibits the effects that are described hereinbelow.

The transmission of multimedia RBT/BT is realized by multimedia RBT/BT reproduction control device 105 and media control storage device 109 that are provided outside the exchange, and as a result, RBT/BT can be easily converted to multimedia even when an exchange such as the one that is used in the prior art is not provided with capabilities for voice recording or codec conversion. In addition, these operations are carried out by including subscriber service control device 107 and user profile control device 108, and access to each of these devices by a subscriber is enabled by any of the following; operations for service subscription and registration, alteration, and deletion of profiles by way of a network or packet network; or registration of media files by way of a telephone or the Internet.

Further, a service subscriber can play back, multimedia RBT/BT in various formats such as speech, melodies, still pictures, or video, to the originator of a telephone call to the service subscriber.

In addition, a service subscriber can selectively play back, to the originator of a telephone call to the service subscriber, RBT/BT for each call originator and for each telecommunication carrier that is used by a call originator, and moreover, according to circumstances such as a time period or specific days.

Finally, in addition to using material that has been provided by a content provider, a service subscriber can register material, that is provided by the service subscriber, as multimedia RBT/BT that are to be played back to the originator of a telephone call to the service subscriber, and further, can combine and play back these materials.

## Claims

1. A multimedia RBT/BT transmission system for sending to call originator terminals multimedia RBT/BT that differ for each subscriber terminal; said multimedia RBT/BT transmission system comprising:
a subscriber service control device in which multimedia RBT/BT service subscription states are registered for each subscriber terminal;
a user profile control device in which profiles are registered for each subscriber terminal that has subscribed to a multimedia RBT/BT service;
a media control storage device in which multimedia RBT/BT are registered for each subscriber terminal that has subscribed to a multimedia RBT/BT service;
a multimedia RBT/BT reproduction control device for controlling the operation of each of the above-described devices; and
an exchange for, upon receiving notification of an incoming call to a subscriber terminal, both checking the state of the subscriber terminal and referring to said subscriber service control device to check whether the subscriber terminal is registered or not; and, if the subscriber terminal is registered in said subscriber service control device, and moreover, if the state of the subscriber terminal is vacant or busy, implementing routing to said multimedia RBT/BT reproduction control device;
wherein:
said multimedia RBT/BT reproduction control device, upon receiving an incoming call to said subscriber terminal, submits an inquiry to said user profile control device for a user profile of the subscriber; upon subsequently receiving notification of a multimedia file that is to be reproduced from said user profile control device, requests said media control storage device to reproduce the relevant multimedia file; and when a multimedia file is consequently transferred from said media control storage device, converts the multimedia file to multimedia and reproduces the multimedia in the call originator terminal by way of said exchange.

2. The multimedia RBT/BT transmission system according to claim 1, wherein said media control storage device registers multimedia RBT/BT in which media such as speech, melodies, still pictures, and video have been converted to multimedia.

3. The multimedia RBT/BT transmission system according to claim 1, wherein profiles that are registered for each subscriber terminal in said user profile control device include as profile parameters various elements such as call originator terminals, the telecommunication carrier that a call originator terminal uses, a time, or a day to be remembered.

4. The multimedia RBT/BT transmission system according to claim 1, wherein registration to said user profile control device and said media control storage device is realized by way of a network.

5. The multimedia RBT/BT transmission system according to claim 1, wherein registration to said media control storage device is realized by way of a subscriber terminal and a telephone exchange network, or by way of a subscriber terminal and a network.

6. The multimedia RBT/BT transmission system according to claim 1, wherein operations such as the new creation, editing, checking, and deletion of profiles to said user profile control device and said media control storage device are realized by way of a packet exchange network and a network.

7. A multimedia RBT/BT transmission method for transmitting multimedia RBT/BT that differ for each subscriber terminal to a call originator terminal ; said method comprising:
a subscriber service control means in which multimedia RBT/BT service subscription states are registered for each subscriber terminal;
a user profile control means in which profiles are registered for each subscriber terminal that has subscribed to a multimedia RBT/BT service;
a media control storage means in which multimedia RBT/BT are registered for each subscriber terminal that has subscribed to a multimedia RBT/BT service;
a multimedia RBT/BT reproduction control means for controlling the operation of each of the above-described means; and
an exchange means for, upon receiving notification of an incoming call to a subscriber terminal, both checking the state of the subscriber terminal and referring to said subscriber service control means to check whether the subscriber terminal is registered or not; and, if the subscriber terminal is registered in said subscriber service control means, and moreover, if the state of the subscriber terminal is vacant or busy, implementing routing to said multimedia RBT/BT reproduction control means;
wherein :
said multimedia RBT/BT reproduction control means, upon receiving an incoming call to said subscriber terminal, submits an inquiry to said user profile control means for a user profile of the subscriber; upon subsequently receiving notification of a multimedia file that is to be reproduced from said user profile control means, requests said media control storage means to reproduce the relevant multimedia file; and when a multimedia file is consequently transferred from said media control storage means, converts the multimedia file to multimedia and reproduces the multimedia on the call originator terminal by way of said exchange means.

8. The multimedia RBT/BT transmission method according to claim 7, wherein said media control storage means registers multimedia RBT/BT such as speech, melodies, still pictures, and video.

9. The multimedia RBT/BT transmission method according to claim 7, wherein profiles that are registered for each subscriber terminal in said user profile control means include as profile parameters various elements such as call originator terminals, the telecommunication carrier that a call originator terminal uses, a time, or a day to be remembered.

10. The multimedia RBT/BT transmission method according to claim 7, wherein registration to said user profile control means and said media control storage means is realized by way of a network.

11. The multimedia RBT/BT transmission method according to claim 7, wherein registration to said media control storage means is realized by way of a subscriber terminal and a telephone exchange network, or by way of a subscriber terminal and a network.

12. The multimedia RBT/BT transmission method according to claim 7, wherein operations such as the new creation, editing, checking, and deletion of profiles in said user profile control means and in said media control storage means are realized by way of a packet exchange network and a network.
